# EUROPÄISCHE PATENTSCHRIFT

(11) **EP 1 140 588 B1**
(45) Veröffentlichungstag und Bekanntmachung des Hinweises auf die Patenterteilung: **15.06.2005**
(21) Anmeldenummer: 00982972.2
(22) Anmeldetag: 07.10.2000
(51) Int. Cl.: B60S 1/38, B21D 5/01

(54) **VERFAHREN ZUM HERSTELLEN EINES IM QUERSCHNITT U-FÖRMIGEN BÜGELS EINES SCHEIBENWISCHERS UND ENTSPRECHENDE VORRICHTUNG**
METHOD FOR PRODUCTION OF A WINDSCREEN WIPER ARM WITH A U-PROFILE CROSS-SECTION AND THE CORRESPONDING DEVICE
PROCEDE DE PRODUCTION D'UN ETRIER DE SECTION TRANSVERSALE EN U POUR ESSUIE-GLACE ET DISPOSITIF CORRESPONDANT

(30) Priorität: 26.10.1999 DE 19951468
(43) Veröffentlichungstag der Anmeldung: 10.10.2001
(73) Patentinhaber: ROBERT BOSCH GMBH, 70442 Stuttgart (DE)
(72) Erfinder: BIJNENS, Marc, B-3690 Zutendaal (BE); CRIEL, Paul, B-3800 St. Truiden (BE)
(86) Internationale Anmeldenummer: PCT/DE2000/003533
(87) Internationale Veröffentlichungsnummer: WO 2001/030620

(56) Entgegenhaltungen:
- EP-A- 0 792 704
- DE-A- 19 615 867

## Beschreibung

Die Erfindung betrifft ein Verfahren zum Herstellen eines im Querschnitt U-förmigen Bügels eines Scheibenwischers, mit zwei in den Schenkeln des Bügels gelegenen Durchgangslöchern, durch die ein Niet verläuft, entsprechend dem einleitenden Teil des Anspruchs 1.

Ferner betrifft die Erfindung eine Vorrichtung zum Herstellen eines im Querschnitt U-förmigen Bügels eines Scheibenwischers, wobei die Vorrichtung Abkantmittel zum Erzeugen eines U-Profils aus einer mit zwei Durchgangslöchern versehenen ebenen Bügelplatine, ein Positionierungsmittel zum Verschieben eines Rohniets in die nach Erzeugung des U-Profils zueinander fluchenden Durchgangslöcher und Verformungsmittel zur Herstellung wenigstens eines Nietkopfes am Rohniet aufweist, gemäß dem einleitenden Teil Oberbegriff des Anspruchs 8.

### Stand der Technik

Verfahren zum Herstellen eines im Querschnitt U-förmigen Bügels eines Scheibenwischers sind bekannt. Bei diesen bekannten Verfahren wird in einer ersten Station ein U-förmiger Bügel geformt, dessen zwei Schenkel mit zueinander fluchtenden Durchgangslöchern versehen sind. In einer zweiten Station wird ein Rohniet derart durch die zwei zueinander fluchtenden Durchgangslöcher des U-förmigen Bügels eingesteckt, dass jeweils ein freies Ende des Rohniets aus dem entsprechenden Durchgangsloch des Bügels nach außen vorsteht. Anschließend wird das jeweilige Ende des Rohniets in einem separaten Arbeitsgang unter Ausbildung eines Nietkopfes getaumelt. Dieses Verfahren zum Herstellen eines U-förmigen Bügels mit einem Niet ist verhältnismäßig kompliziert und zeitaufwendig.

Ferner ist es bekannt, einen U-förmigen und geeignet ausgebildeten Bügel mit einem Rollniet zu versehen. Zum Herstellen eines Rollniets werden die Schenkel des U-förmigen Bügels mittels geeigneter Ausschneidungen nachteilhafterweise geschwächt, so dass es im Betrieb des Scheibenwischers zu einem unerwünschten Abbrechen der Rollnietanbindung am Bügel kommen kann. Ein derartiges Abbrechen des Rollniets vom Bügel kann beispielsweise durch eine eintretende Materialermüdung hervorgerufen werden. Auch dieses bekannte Verfahren zum Herstellen eines U-förmigen Bügels unter Ausbildung eines Rollniets ist nachteilhafterweise kompliziert und zeitintensiv.

### Vorteile der Erfindung

Das erfindungsgemäße Verfahren umfasst folgende Schritte:
- Erzeugen der Durchgangslöcher in einer ebenen Bügelplatine;
- Einstecken eines Rohniets in eines der Durchgangslöcher;
- Abkanten der Schenkel zur Erzeugung des U-Profils und dadurch Positionieren des Rohniets in eine fluchtende Lage zum anderen Durchgangsloch;
- Verschieben des Rohniets in die durch beide Durchgangslöcher verlaufende Position und
- Nieten des Rohniets.

Durch das Einstecken eines Rohniets in eines der zwei Durchgangslöcher einer ebenen Bügelplatine vor dem Abkanten der Schenkel ist es möglich, gleichzeitig beim Herstellen des im Querschnitt U-förmigen Bügels den Rohniet in die gewünschte, in Bezug auf die zwei Durchgangslöcher fluchtende Lage zu bringen. Auch ist es möglich, das Verschieben des Rohniets in die durch beide Durchgangslöcher verlaufende Position zusammen mit dem Abkanten der Schenkel und Positionieren des Rohniets in einem kontinuierlichen Arbeitsschritt mittels eines einzigen, geeignet ausgebildeten Werkzeugs durchzuführen. Das Herstellen eines im Querschnitt U-förmigen Bügels unter Ausbildung eines Niets kann somit vorteilhafterweise in einer einzigen Fertigungs- beziehungsweise Bearbeitungsstation erfolgen.

Vorzugsweise wird der Rohniet in der Bügelplatine lagefixiert. Dies gewährleistet, dass der Rohniet vor und während des Abkantens der Schenkel zum Erzeugen des U-Profils des Bügels in einer definierten Position angeordnet ist. Ferner ist es möglich, bereits vormontierte, jeweils mit einem lagefixierten Rohniet versehene ebene Bügelplatinen zum Herstellen von im Querschnitt U-förmigen Bügeln für Scheibenwischer einzusetzen.

Mit Vorteil wird der Rohniet zur Lagefixierung unter Ausbildung eines Presssitzes in das Durchgangsloch der ebenen Bügelplatine gepresst. Eine Lagefixierung des Rohniets in einem der zwei Durchgangslöcher der Bügelplatine mittels eines Presssitzes ist fertigungstechnisch einfach und zuverlässig herstellbar. Dabei lässt sich die Stärke des Presssitzes zwischen Rohniet und Bügelplatine in verhältnismäßig einfacher Weise auf den jeweiligen Anwendungsfall, das heißt in Abhängigkeit von der Wandstärke der Bügelplatine und dem Durchmesser des Rohniets, anpassen. Dadurch sind insbesondere die Verfahrensschritte Verschieben und Nieten des Rohniets in zuverlässiger und effektiver Weise kontrollierbar und/oder einstellbar. Ferner gewährleistet ein Presssitz als Lagefixierung des Rohniets, dass selbiger nach dem Abkanten der Schenkel und während des Verschiebens des Rohniets exakt zum anderen Durchgangsloch fluchtet und keine, das Verschieben hindernde Schiebstellung des Rohniets in Bezug auf die Durchgangslöcher eintritt.

Vorzugsweise wird der Rohniet mittels einer mit einer Nietkante in Wirkkontakt stehenden Anlaufschräge in das andere Durchgangsloch des U-förmigen Bügels gedrückt, bis der Rohniet mit seinen Enden aus den Durchgangslöchern nach außen vorsteht. Aufgrund der definierten Ausgangsposition (Presssitz) des Rohniets in einem der Durchgangslöcher der Bügelplatine ist es in besonders einfacher und zuverlässiger Weise möglich, den Rohniet nach Abkanten der Schenkel aus seiner Ausgangsposition in die durch beide Durchgangslöcher verlaufende Endposition zu verschieben. Dabei ist es besonders wichtig, dass der Rohniet in der Endposition aus den Durchgangslöchern nach außen vorsteht, so dass ein Herstellen von Nietköpfen (Nieten des Rohniets) möglich ist. Fertigungstechnisch ist eine Anlaufschräge verhältnismäßig einfach und kostengünstig an einem entsprechenden Fertigungswerkzeug herstellbar.

Gemäß einer bevorzugten Ausführungsvariante werden die aus dem U-förmigen Bügel nach außen vorstehenden Enden des Rohniets unter Ausbildung eines jeweiligen Nietkopfes mittels eines Taumelverfahrens plastisch verformt. Es ist verfahrenstechnisch besonders günstig, mittels eines Taumelverfahrens die aus den Durchgangslöchern des im Querschnitt U-förmigen Bügels vorstehenden freien Enden des Rohniets vorzugsweise gleichzeitig jeweils zu einem Nietkopf zu formen. Dabei kann der im Querschnitt U-förmige Bügel mit dem sich in fluchtender Lage befindenden Rollniet seine ursprüngliche Position beibehalten und muss nicht in eine spezielle beziehungsweise neue Arbeitsstellung zur Formung der Nietköpfe gebracht werden. Dabei ist ein Taumelverfahren zur Herstellung eines Nietkopfes besonders vorteilhaft in Bezug auf eine korrekte und kontrollierbare Materialverformung am entsprechenden Rohnietende. Es kann die gewünschte beziehungsweise notwendige Kraftaufbringung und somit die Materialverformung zum Herstellen des Nietkopfes mittels geeigneter Variierung des Taumelverfahrens (Verformungskraft, Anstellwinkel, Taumelgeschwindigkeit) an den jeweiligen Anwendungsfall angepasst werden.

Mit Vorteil werden die zwei Enden des Rohniets gleichzeitig plastisch verformt. Die Formung beider aus den Durchgangslöchern des Bügels nach außen vorstehenden Enden des Rohniets zu jeweils einem Nietkopf ermöglicht eine schnelle und effektive Nietherstellung am im Querschnitt U-förmigen Bügel.

Vorteilhafterweise wird während der plastischen Verformung der zwei Enden der Rohniet an seinem Schaftteil zwischen den Schenkeln stabilisiert. Dadurch wird ein Ausknicken des Rohniets während des Herstellens der Nietköpfe effektiv verhindert. Es ist somit in einfacher Weise möglich, eine korrekte und besonders stabile Nietverbindung zwischen den Schenkeln des Bügels herzustellen.

Erfindungsgemäß ist die Vorrichtung dadurch gekennzeichnet, dass die Abkantmittel, die Positionierungsmittel und die Verformungsmittel in einer einzigen Bearbeitungsstation angeordnet sind. Das Herstellen eines im Querschnitt U-förmigen Bügels und eines in diesem enthaltenen Niets in einer einzigen Bearbeitungsstation ist fertigungstechnisch besonders günstig, da hierdurch die ansonsten auftretende Transport- und/oder Wartezeiten während des Herstellungsverfahrens vermieden werden. Ferner kann bei einem Abkanten der Schenkel, Verschieben und Nieten des Rohniets in einer einzigen Bearbeitungsstation auf verhältnismäßig einfache Weise ein Bügel unter besonders hohen Präzisionsanforderungen hergestellt werden, da die durch den Einsatz von mehreren, an verschiedenen Stationen wirkenden Bearbeitungsmitteln entstehenden Fertigungstoleranzen am Bügel und/oder am Niet vollständig oder wenigstens teilweise eliminiert werden. Ferner können die zum Einsatz kommenden Fertigungsmittel in einer einzigen Station in besonders raumsparender Weise angeordnet werden.

Vorteilhafterweise sind die Abkantmittel als linear aufeinander zu und voneinander weg bewegbare Stempel ausgebildet. Stempel sind zum Abkanten der Schenkel zur Erzeugung eines im Querschnitt U-förmigen Profils besonders geeignete Werkzeuge, da sie verhältnismäßig einfach herstellbar sind und an verschiedene Anwendungsfälle durch entsprechende geometrische Ausgestaltung gut angepasst werden können.

Mit Vorteil ist das Positionierungsmittel als Anlaufschräge an einem der Stempel ausgebildet. Der mit einer Anlaufschräge versehene Stempel weist somit gleichzeitig zwei unterschiedliche Bearbeitungsfunktionen auf, nämlich das Abkanten der Schenkel zur Erzeugung des U-förmigen Profils und das Verschieben des Rohniets in die durch beide Durchgangslöcher verlaufende Position. Dabei ist eine Anlaufschräge an einem der Stempel fertigungstechnisch besonders einfach herstellbar. Ferner ermöglicht eine Anlaufschräge eines Stempels ein relativ exaktes und zuverlässiges Verschieben des Rohniets in die gewünschte Endposition im Bügel.

Vorzugsweise sind die Verformungsmittels als bewegliche Verformungselemente ausgebildet. Bewegliche Verformungselemente ermöglichen eine präzise und an den jeweiligen Anwendungsfall anpassbare Verformung der aus den Durchgangslöchern vorstehenden Enden des Rohniets zu einem jeweiligen Nietkopf.

Gemäß einer bevorzugten Ausführungsform ist die Anlaufschräge als lineare, geradlinige Führungskante ausgebildet. Eine lineare, geradlinige Führungskante als Anlaufschräge gewährleistet ein kontinuierliches Verschieben des Rohniets in die durch beide Durchgangslöcher verlaufende Position. In alternativer Ausgestaltung und in Abhängigkeit des jeweiligen Anwendungsfalls kann die Anlaufschräge auch als kurvenförmige Führungskante ausgebildet sein.

Vorzugsweise sind die Verformungselemente als eine Taumelbewegung ausführende Schalen ausgebildet. In dieser Weise ist es möglich, die aus den Durchgangslöchern nach außen vorstehenden Enden des Rohniets mittels eines Taumelverfahrens plastisch zu einem Nietkopf zu verformen. Dabei kann die Taumelbewegung der Schalen, das heißt insbesondere der Anstellwinkel und die Verformungskraft, an die jeweiligen Material- und/oder Geometrieparameter des Rohniets beziehungsweise des im Querschnitt U-förmigen Bügels angepasst werden.

Mit Vorteil weist die Vorrichtung ein Stabilisierungsmittel für den zwischen den Schenkeln des U-Profils befindlichen Nietteil während der Herstellung des Nietkopfes auf. Durch das Stabilisierungsmittel wird verhindert, dass der Rohniet an seinem zwischen den Schenkeln des U-Profils befindlichen Nietteil während der Herstellung des Nietkopfes aufgrund der einwirkenden Bearbeitungskräfte ausknickt.

Vorteilhafterweise sind die Stempel im Schwenkbereich des Rohniets mit einer Ausnehmung versehen. Die Vorsehung einer Ausnehmung in den Stempeln verhindert, dass der in einem der zwei Durchgangslöcher der ebenen Bügelplatine eingesteckte Rohniet während des Abkantens der Schenkel zur Erzeugung des U-Profils mit den Stempelkörpern kollidiert, da auch der Rohniet während des Abkantens der Schenkel notwendigerweise eine Schwenkbewegung durchführt.

Vorzugsweise ist die Vorrichtung mit einem Rüttler zur Rohnietzuführung operativ verbunden. Ein Rüttler ist in besonders zuverlässiger Weise geeignet, eine große Anzahl an Rohnieten nacheinander, schnell und in einer definierten Position der Vorrichtung zuzuführen.

Mit Vorteil weist die Vorrichtung ein Referenzelement auf zur exakten Positionierung der ebenen Bügelplatine zwischen den Stempeln. Um eine genaue Fluchtung der zwei Durchgangslöcher nach dem Herstellen des U-Profils zu erhalten, muss die ebene Bügelplatine in einer entsprechend genauen Position in Bezug auf die Stempel angeordnet sein. Hierbei ist es besonders vorteilhaft, ein Referenzelement vorzusehen, welches mit einem Bezugspunkt beziehungsweise einer Bezugslinie der ebenen Bügelplatine in Kontakt kommt und somit eine exakte Positionierung der ebenen Bügelplatine zwischen den Stempeln ermöglicht. Ein Bezugspunkt beziehungsweise eine Bezugslinie kann auf einer Kante eines der Durchgangslöcher oder einer anderen Öffnung beziehungsweise Rand der ebenen Bügelplatine liegen.

Weitere vorteilhafte Ausgestaltungen der Erfindung ergeben sich aus der Beschreibung.

### Zeichnungen

Die Erfindung wird nachfolgend in einem Ausführungsbeispiel anhand zugehöriger Zeichnungen näher erläutert. Es zeigen:
- Figur 1: eine schematische Seitenansicht einer erfindungsgemäßen Vorrichtung mit einer ebenen Bügelplatine;
- Figur 2: eine schematische Seitenansicht der Vorrichtung gemäß'Figur 1 während des Abkantens der Bügelplatine;
- Figuren 3 und 4: eine schematische Seitenansicht der Vorrichtung gemäß der Figur 2 mit fortschreitender Abkantung der Bügelplatine;
- Figur 5: eine schematische Seitenansicht der Vorrichtung gemäß Figur 4 mit nahezu vervollständigter Abkantung der Bügelplatine;
- Figur 6: eine schematische Seitenansicht der Vorrichtung gemäß Figur 5 mit einem Rohniet in zu zwei Durchgangslöcher der Bügelplatine fluchtender Lage;
- Figur 7: eine schematische Seitenansicht der Vorrichtung während des Nietens des Rohniets;
- Figur 8: eine schematische, in Bezug auf Figur 5 um 90° gedrehte Seitenansicht der Vorrichtung während des Nietens und
- Figur 9: eine schematische Draufsicht auf eine Einzelheit der ebenen Bügelplatine gemäß Figur 1.

### Beschreibung der Erfindung

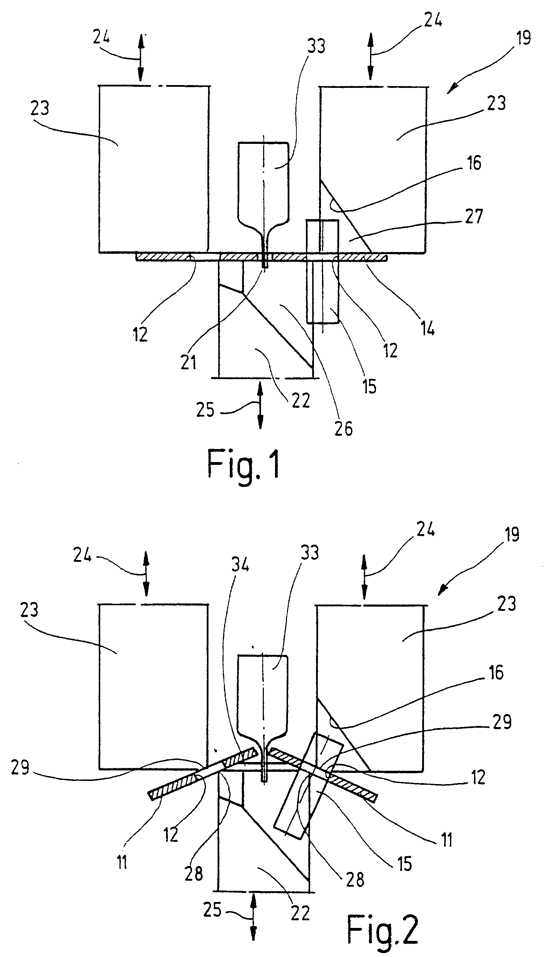

Unter Bezugnahme auf die Figur 1 ist eine ebene Bügelplatine 14 dargestellt, welche mit zwei zueinander beabstandeten Durchgangslöchern 12 versehen ist. In einem der beiden Durchgangslöcher 12 ist ein Rohniet 15 unter Ausbildung eines Presssitzes lagefixiert. Die ebene Bügelplatine 14 wird von einer Vorrichtung 19, welche zwei obere Stempel 23 und einen unteren Stempel 22 enthält, derart gehalten, dass ein zentraler Abschnitt der Bügelplatine 14 auf einer Stirnfläche des unteren Stempels 22 aufliegt und zwei seitliche äußere Abschnitte der Bügelplatine 14 über die Stirnfläche des unteren Stempels 22 vorstehen. Die zwei oberen Stempel 23 der Vorrichtung 19, welche in Bezug auf den unteren Stempel 22 gegenüberliegend und seitlich beabstandet angeordnet sind, liegen mit ihren entsprechenden Stirnseiten an den in Bezug auf den unteren Stempel 22 vorstehenden seitlichen Abschnitten der ebenen Bügelplatine 14 an. Der untere Stempel 22 und die zwei oberen Stempel 23 sind gemäß den Pfeillinien 24 und 25 derart gleichzeitig oder nacheinander aufeinander zu beziehungsweise voneinander weg bewegbar, dass die zwischen dem unteren Stempel 22 und den oberen Stempeln 23 angeordnete ebene Bügelplatine 14 zu einem im Querschnitt U-förmigen Bügel 10 verformt werden kann. Im Bereich des Rohniets 15 sind der untere Stempel 22 und der entsprechende obere Stempel 23 mit einer geeigneten Ausnehmung 26, 27 versehen, um bei der Verformung der ebenen Bügelplatine 14 zu einem im Querschnitt U-förmigen Bügel 10 eine unerwünschte Kollision des Rohniets 15 mit den an der Bügelplatine 14 anliegenden Stempeln 22, 23 zu vermeiden.

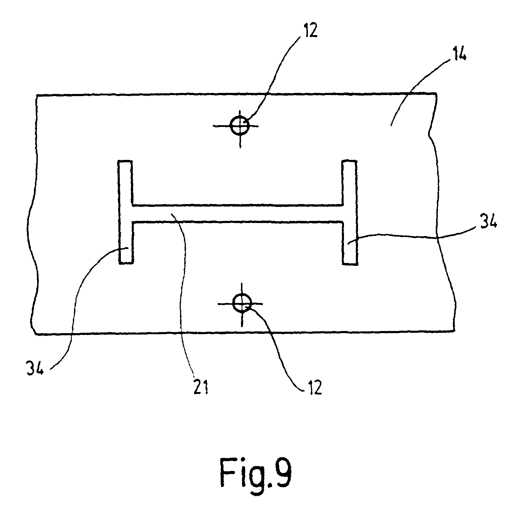

Wie in Figur 9 dargestellt ist, weist die ebene Bügelplatine 14 eine zentrale, longitudinale, langlochartige Durchgangsöffnung 21 und zwei transversale, langlochartige Durchgangsöffnungen 34 auf. Die longitudinale Durchgangsöffnung 21 und die zwei transversalen Durchgangsöffnungen 34 sind miteinander durchgehend verbunden und bilden zusammen eine H-Form, wobei die zwei Durchgangslöcher 12 auf einer gemeinsamen transversalen Achse zwischen den zwei transversalen Durchgangsöffnungen und im gleichen Abstand zur longitudinalen Durchgangsöffnung 21 liegen. Sowohl die Durchgangslöcher 12 als auch die Durchgangsöffnungen 21, 34 können mittels einer geeigneten Stanzung an der ebenen Bügelplatine 14 realisiert werden. Vorzugsweise erfolgt eine derartige Stanzbearbeitung der ebenen Bügelplatine 14 in einer in Bezug auf die Vorrichtung 19 separaten Bearbeitungsstation.

Entsprechend Figur 1 weist die Vorrichtung 19 ein Referenzelement 33, welches zwischen den zwei oberen Stempeln 23 angeordnet ist und mit einem freien Ende in die zentrale, longitudinale Durchgangsöffnung 21 der ebenen Bügelplatine 14 ragt, um eine exakte, in Bezug auf die Stempel 22, 23 symmetrische Anordnung der ebenen Bügelplatine 14 zu gewährleisten. Im vorliegenden Ausführungsbeispiel ragt das freie Ende des Referenzelements 33 durch die longitudinale Durchgangsöffnung 21 bis in die Ausnehmung 26 des unteren Stempels 22 hinein, wobei das Referenzelement 33 derart ausgebildet ist, dass bei der Verformung der ebenen Bügelplatine 14 zu einem U-förmigen Bügel 10 eine Kollision zwischen der Bügelplatine 14 und dem Referenzelement 33 vermieden wird.

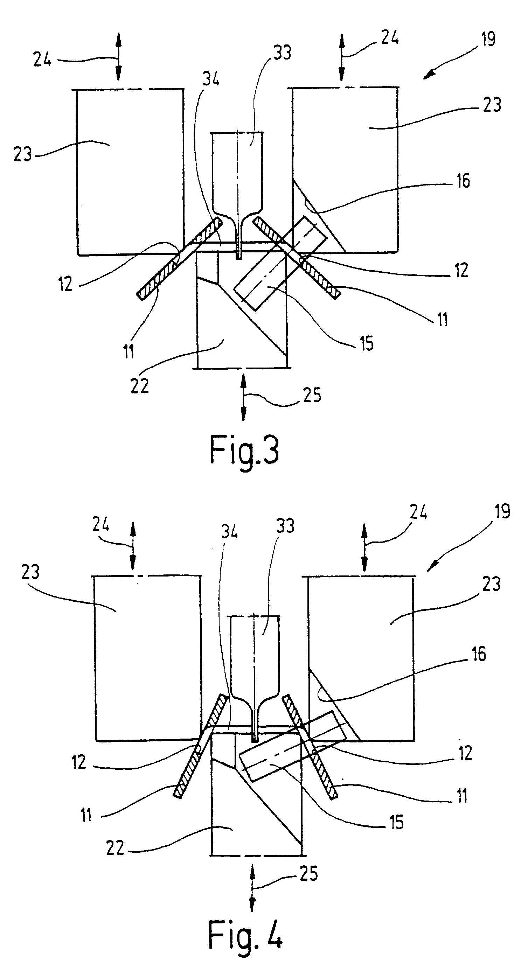

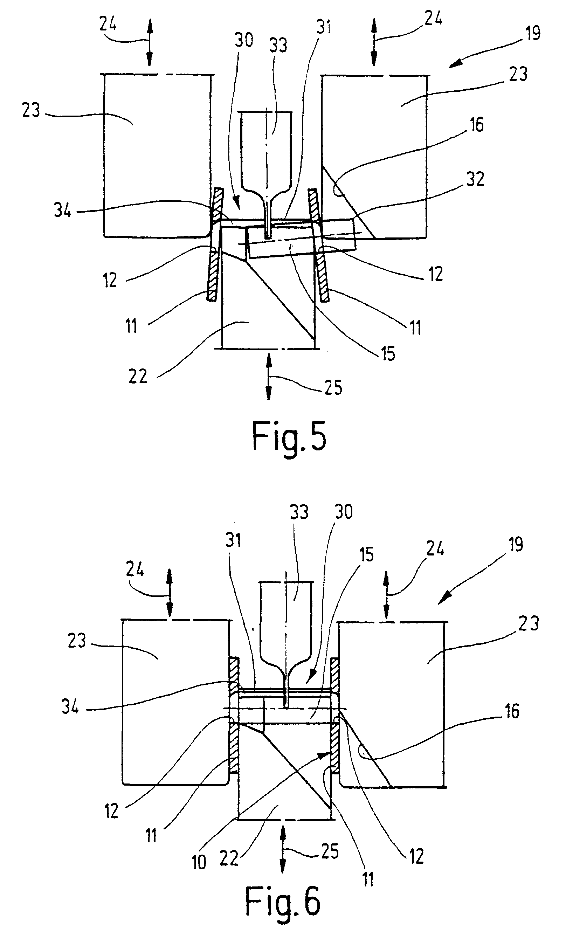

Die Figuren 2 bis 5 zeigen verschiedene Phasen des Abkantens von zwei Schenkeln 11 der zunächst ebenen Bügelplatine 14 (siehe Figur 1) zur Erzeugung eines gewünschten U-Profils. Hierzu werden der untere Stempel 22 und/oder die zwei oberen Stempel 23 gemäß den Pfeillinien 24, 25 aufeinander zu bewegt, so dass die Schenkel 11 des Bügels 10 aufgrund der durch die Verformungskanten 28 des unteren Stempels 22 und durch die jeweilige Verformungskante 29 der oberen Stempel 23 in die Bügelplatine 14 eingeleiteten Verformungskraft derart plastisch gebogen beziehungsweise geschwenkt werden, dass die anfangs ebene Bügelplatine 14 (siehe Figur 1) zu einem im Querschnitt U-förmigen Bügel 10 geformt wird (siehe Figur 5). Bei dieser plastischen Verformung der ebenen Bügelplatine 14 zu einem U-Profil wird der in einem der zwei Durchgangslöcher 12 lagefixierte Rohniet 15 von einer Ausgangsposition (siehe Figur 1) entsprechend der Bewegung der Schenkel 11 um vorzugsweise 90° derart geschwenkt, dass er eine in Bezug auf die zwei Durchgangslöcher 12 fluchtende Lage einnimmt. Während des Abkantens der Schenkel 11 zur Erzeugung des U-Profils gemäß den Figuren 2 bis 5 wird eine Zugangsöffnung 30 (siehe Figur 5) freigegeben, deren Längserstreckung derjenigen der longitudinalen Durchgangsöffnung 21 entspricht und deren Querausdehnung der Länge der transversalen Durchgangsöffnungen 34 entspricht. Dabei erstreckt sich die Länge der transversalen Durchgangsöffnungen 34 über die gesamte Breite der Kopfflanke 21 des im Querschnitt U-förmigen Bügels 10. Aufgrund einer derartig ausgebildeten und durch geeignete Vorbereitung (Durchgangsöffnungen 21, 34) der ebenen Bügelplatine 14 erhaltbaren Zugangsöffnung 30 wird ermöglicht, dass im Bereich des Rohniets 15 die Schenkel 11 des Bügels 10 keiner plastischen Verformung unterzogen werden, sondern als ebene Flanken aus einer in Figur 1 horizontal dargestellten Ausgangsposition in eine gemäß Figur 6 senkrechte Endposition geschwenkt werden.

Unmittelbar nach Abkanten der Schenkel 11 zur Erzeugung des U-Profils und Positionieren des Rohniets 15 in eine in Bezug auf die zwei Durchgangslöcher 12 fluchtende Lage wird durch weiteres Aufeinanderzubewegen des unteren Stempels 22 und/oder der oberen Stempel 23 gemäß den Pfeillinien 25, 24 ein Verschieben des Rohniets 15, der in einer der zwei Durchgangslöcher 12 mittels eines Presssitzes lagefixiert ist, zum anderen Durchgangsloch 12 hin eingeleitet. Figur 6 zeigt die Vorrichtung 19 und den U-förmigen Bügel 10 nach dem Verschieben des Rohniets 15 in das andere Durchgangsloch 12 des im Querschnitt U-förmigen Bügels 10. Diese Verschiebung des Rohniets 15 wird durch eine Anlaufschräge 16 an einem der oberen Stempel 23 hervorgerufen, welche bei einer Relativbewegung gemäß den Pfeillinien 24, 25 zwischen den Stempeln 22, 23 mit einer Kontaktkante 32 des Rohniets 15 in Wirkkontakt kommt. Bei diesem Wirkkontakt überträgt die in Bezug auf die die Kontaktkante 32 enthaltende Stirnfläche des Rohniets 15 geneigte Anlaufschräge 16 auf die Kontaktkante 32 bei einer Verschiebungsbewegung des unteren Stempels 22 und/oder der oberen Stempel 23 gemäß den Pfeillinien 25, 24 eine entsprechende Druckkraft. Aufgrund dieser von der Anlaufschräge 16 auf die Kontaktkante 32 übertragenen Druckkraft wird der Rohniet 15 durch das eine Durchgangsloch 12 (Presssitz) derart verschoben, dass er mit seinem im Inneren des U-Profils befindlichen freien Ende in das zweite, fluchtende Durchgangsloch 12 des Bügels 10 eintritt. Dabei wird der Rohniet 15 so lange in Bezug auf die Durchgangslöcher 12 fluchtend verschoben, bis seine beiden freien Enden aus den zwei Durchgangslöchern 12 jeweils nach außen vorstehen (nicht in Figur 6 dargestellt). Die Anlaufschräge 16 ist im vorliegenden Ausführungsbeispiel vorzugsweise als lineare, geradlinige Führungskante ausgebildet.

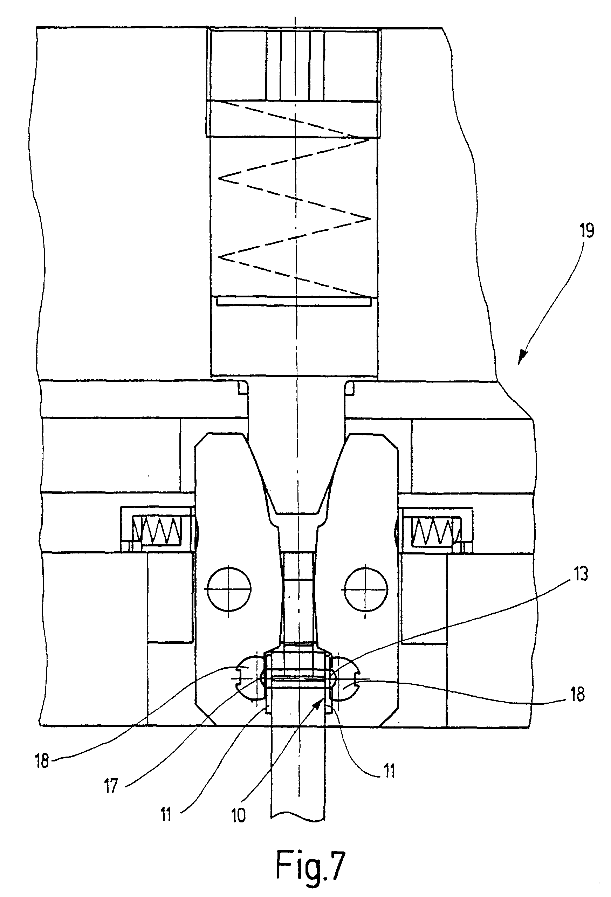

In Figur 7 sind Verformungsmittel 18 der Vorrichtung 19 zur Herstellung von zwei Nietköpfen 17 am Rohniet 15 dargestellt. Die Verformungsmittel 18 realisieren somit das Nieten des Rohniets 15 und sind als bewegliche Verformungselemente 18 in Form von Schalen ausgebildet, welche in Bezug auf eine Längsachse des Rohniets 15 eine Taumelbewegung ausführen können. Dabei werden die zwei aus den Durchgangslöchern 12 nach außen vorstehenden Enden des Rohniets 15 mittels der beweglichen Schalen 18 der Vorrichtung 19 unter Ausbildung eines jeweiligen Nietkopfes 17 plastisch verformt. Die Verformung der Enden des Rohniets 15 erfolgt vorzugsweise im Taumelverfahren. Hierzu führen die Schalen 18 eine einstellbare und kontrollierbare Taumelbewegung in Bezug auf die Enden des Rohniets 15 aus.

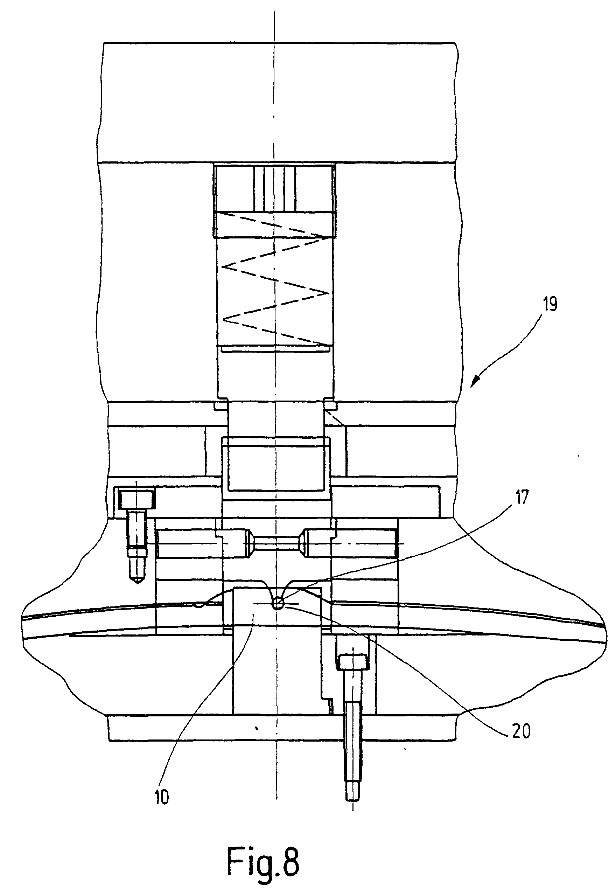

In Figur 8 ist die Anordnung gemäß Figur 7 um 90° gedreht dargestellt. Um ein Ausknicken des Rohniets 15 während des Nietens, das heißt während der plastischen Verformung der Enden des Rohniets 15 mittels der eine Taumelbewegung durchführenden Schalen 18, zu verhindern, weist die Vorrichtung 19 ein Kernstück 20 auf (siehe Figur 8). Das Kernstück 20 stabilisiert den zwischen den zwei Schenkeln 11 sich erstreckenden Schaft des Rohniets 15 und verhindert somit eine unerwünschte elastische und/oder plastische Verformung des Rohniets 15 zwischen den zwei Schenkeln 11. In dieser Weise wirkt das Kernstück 20 als Stabilisierungsmittel für den zwischen den Schenkeln 11 befindlichen Nietteil während der Herstellung der Nietköpfe 17. Vorzugsweise erstreckt sich das Kernstück 20 über die gesamte Schaftlänge des Rohniets 15 zwischen den Schenkeln 11 des im Querschnitt U-förmigen Bügels 10, so dass es inseitig mit den zwei Schenkeln 11 des Bügels 10 in Berührungskontakt steht und somit auch unerwünschte elastische und/oder plastische Verformungen der Schenkel 11 während des Nietens des Rohniets 15 effektiv verhindert. Das Kernstück 20 weist einen den Schaft des Rohniets 15 um zirka 180° umfassenden Aufnahmesitz auf.

Entsprechend der in Figur 7 dargestellten Ausführungsform werden die beiden Enden des Rohniets 15 gleichzeitig in einem Doppeltaumelnietverfahren mittels der zwei beweglichen Schalen 18 plastisch verformt. Nach Fertigstellung des Niets 13 ist selbiger in den Durchgangslöchern 12 der Schenkel 11 des im Querschnitt U-förmigen Bügels 10 unverdrehbar verankert.

Gemäß einer nicht dargestellten Ausführungsform kann der Rohniet 15 auch an einem seiner zwei Enden, das heißt an dem Ende, welches nach dem Abkanten der Schenkel 11 zur Erzeugung des U-Profils vom Bügel 10 nach außen vorsteht, bereits mit einem Nietkopf versehen sein. Nach dieser weiteren Ausführungsform tritt die Anlaufschräge 16 des entsprechenden oberen Stempels 23 mit dem vorgefertigten Nietkopf in Wirkverbindung und verursacht ein Verschieben des Rohniets 15 mit seinem noch unbearbeiteten freien Ende durch das entsprechende gegenüberliegende Durchgangsloch 12 hindurch. Zur Herstellung des Niets 13 erfolgt somit lediglich eine einseitige, plastische Verformung des Rohniets 15, wobei nur eine bewegliche Schale 18 im einseitigen Taumelverfahren das noch unbearbeitete Ende des Rohniets 15 zu einem Nietkopf verformt.

Die ebene Bügelplatine 14 kann in einer separaten Station vorgefertigt, das heißt stanzbearbeitet werden oder auch bei geeigneter Ausbildung der Vorrichtung 19 (zusätzliche Anordnung entsprechender Stanzwerkzeuge) in einer einzigen Station vorgestanzt und anschließend zu einem im Querschnitt U-förmigen Bügel 10 mit Niet 13 gefertigt werden.

Die zylindrischen Rohniete 15 können mittels eines nicht dargestellten Rüttlers in schneller und zuverlässiger Weise in vertikaler Position der Vorrichtung 19 zugeführt werden und anschließend in eines der zwei Durchgangslöcher 12 des Rohniets 15 unter Ausbildung eines Presssitzes mittels geeigneter Werkzeuge eingesteckt werden.

Es ist somit vorteilhafterweise möglich, die bisher in getrennten Fertigungsstationen durchgeführte Arbeitsschritte (Abkanten der Schenkel, Verschieben des Rohniets, Positionieren des Rohniets) in einer einzigen Station zu realisieren. Das Abkanten der Schenkel 11 zur Erzeugung des U-Profils und das Verschieben des Rohniets 15 in die durch beide Durchgangslöcher 12 verlaufende Position erfolgt somit in einem einzigen Arbeitsschritt, in dem die Stempel 22, 23 lediglich entlang der Pfeillinien 25, 24 aufeinanderzubewegt werden. Dies bedeutet eine Reduzierung von Arbeitsgängen und eine einfache, zuverlässige und schnelle Herstellung eines im Querschnitt U-förmigen Bügels 10 mit Niet 13. Es ist in einer einzigen Vorrichtung die Herstellung eines im Querschnitt U-förmigen Bügels 10 und einer stabilen Nietverbindung möglich. Ferner lässt sich durch Einsatz des Stabilisierungsmittels 20 (Kernstück) bei gleichbleibender Stabilität ein Bügel 10 mit dünnerer Wandstärke realisieren.

## Patentansprüche

1. Verfahren zum Herstellen eines im Querschnitt U-förmigen Bügels (10) eines Scheibenwischers, mit zwei in den Schenkeln des Bügels (10) gelegenen Durchgangslöchern (12), durch die ein Niet (15) verläuft, wobei das Verfahren folgende Schritte umfasst:
- Erzeugen der Durchgangslöcher (12) in einer ebenen Bügelplatine (14);
- Einstecken eines Rohniets (15) in eines der Durchgangslöcher (12);
- Abkanten der Schenkel (11) zur Erzeugung des U-Profils und **dadurch** Positionieren des Rohniets (15) in eine fluchtende Lage zum anderen Durchgangsloch (12) ;
- Verschieben des Rohniets (15) in die durch beide Durchgangslöcher (12) verlaufende Position und
- Nieten des Rohniets (15).

2. Verfahren nach Anspruch 1, wobei der Rohniet (15) in der Bügelplatine (14) lagefixiert wird.

3. Verfahren nach Anspruch 2, wobei der Rohniet (15) zur Lagefixierung unter Ausbildung eines Presssitzes in das Durchgangsloch (12) der ebenen Bügelplatine (14) gepresst wird.

4. Verfahren nach einem der vorhergehenden Ansprüche, wobei der Rohniet (15) mittels einer mit einer Nietkante (32) in Wirkkontakt stehenden Anlaufschräge (16) in das andere Durchgangsloch (12) des U-förmigen Bügels (10) gedrückt wird, bis der Rohniet (15) mit seinen Enden aus den Durchgangslöchern (12) nach außen vorsteht.

5. Verfahren nach einem der vorhergehenden Ansprüche, wobei die aus dem U-förmigen Bügel (10) nach außen vorstehenden Enden des Rohniets (15) unter Ausbildung eines jeweiligen Nietkopfes (17) mittels eines Taumelverfahrens plastisch verformt werden.

6. Verfahren nach einem der vorhergehenden Ansprüche, wobei die zwei Enden des Rohniets (15) gleichzeitig plastisch verformt werden.

7. Verfahren nach einem der vorhergehenden Ansprüche, wobei während der plastischen Verformung der zwei Enden der Rohniet (15) an seinem Schaftteil zwischen den Schenkeln (11) stabilisiert wird.

8. Vorrichtung zum Herstellen eines im Querschnitt U-förmigen Bügels (10) eines Scheibenwischers, wobei die Vorrichtung Abkantmittel (22, 23) zum Erzeugen eines U-Profils aus einer mit zwei Durchgangslöchern (12) versehenen ebenen Bügelplatine (14), ein Positionierungsmittel zum Verschieben eines Rohniets (15) in die nach Erzeugung des U-Profils zueinander fluchtenden Durchgangslöcher (12) und Verformungsmittel (18) zur Herstellung wenigstens eines Nietkopfes (17) am Rohniet (15) aufweist, **dadurch gekennzeichnet, dass** die Abkantmittel (22,23), die Positionierungsmittel (16) und die Verformungsmittel (18) in einer einzigen Bearbeitungsstation angeordnet sind.

9. Vorrichtung nach Anspruch 8, **dadurch gekennzeichnet, dass** die Abkantmittel (22,23) als linear aufeinander zu und voneinander weg bewegbare Stempel (22,23) ausgebildet sind.

10. Vorrichtung nach Anspruch 8 oder 9, **dadurch gekennzeichnet, dass** das Positionierungsmittel (16) als Anlaufschräge (16) an einem der Stempel (22,23) ausgebildet ist.

11. Vorrichtung nach einem der vorhergehenden Ansprüche, **dadurch gekennzeichnet, dass** die Verformungsmittel (18) als bewegliche Verformungselemente (18) ausgebildet sind.

12. Vorrichtung nach einem der vorhergehenden Ansprüche, **dadurch gekennzeichnet, dass** die Anlaufschräge (16) als lineare, geradlinige Führungskante (16) ausgebildet ist.

13. Vorrichtung nach einem der vorhergehenden Ansprüche, **dadurch gekennzeichnet, dass** die Verformungselemente (18) als eine Taumelbewegung ausführende Schalen (18) ausgebildet sind.

14. Vorrichtung nach einem der vorhergehenden Ansprüche, **dadurch gekennzeichnet, dass** die Vorrichtung (19) ein Stabilisierungsmittel (20) für den zwischen den Schenkeln (11) des U-Profils befindlichen Nietteil während der Herstellung des Nietkopfes (17) aufweist.

15. Vorrichtung nach einem der vorhergehenden Ansprüche, **dadurch gekennzeichnet, dass** die Stempel (22,23) im Schwenkbereich des Rohniets (15) mit einer Ausnehmung (27) versehen sind.

16. Vorrichtung nach einem der vorhergehenden Ansprüche, **dadurch gekennzeichnet, dass** die Vorrichtung (19) mit einem Rüttler zur Rohnietzuführung operativ verbunden ist.

17. Vorrichtung nach einem der vorhergehenden Ansprüche, **dadurch gekennzeichnet, dass** die Vorrichtung (19) ein Referenzelement (33) aufweist zur exakten Positionierung der ebenen Bügelplatine (14) zwischen den Stempeln (22,23).

## Claims

1. Method for production of a windscreen wiper arm (10) with a U-profile cross section, having two passage holes (12) which are placed in the limbs of the arm (10) and through which a rivet (15) runs, the method comprising the following steps:
- producing the passage holes (12) in a flat arm mounting plate (14);
- inserting an undriven rivet (15) into one of the passage holes (12);
- bending the limbs (11) to produce the U-profile and, as a result, positioning the undriven rivet (15) in alignment with the other passage hole (12);
- displacing the undriven rivet (15) into the position running through the two passage holes (12), and
- riveting the undriven rivet (15).

2. Method according to Claim 1, the undriven rivet (15) being fixed in position in the arm mounting plate (14).

3. Method according to Claim 2, the undriven rivet (15) being pressed into the passage hole (12) of the flat arm mounting plate (14) to fix it in position with a press fit being formed.

4. Method according to one of the preceding claims, the undriven rivet (15) being pressed by means of a run-on slope (16), which is in operative contact with a rivet edge (32), into the other passage hole (12) of the U-shaped arm (10) until the undriven rivet (15) protrudes with its ends outwards out of the passage holes (12).

5. Method according to one of the preceding claims, those ends of the undriven rivet (15) which protrude outwards out of the U-shaped arm (10) being plastically deformed by means of a wobbling process with a respective rivet head (17) being formed.

6. Method according to one of the preceding claims, the two ends of the undriven rivet (15) being plastically deformed at the same time.

7. Method according to one of the preceding claims, the undriven rivet (15) being stabilized in its stem part between the limbs (11) during the plastic deformation of the two ends.

8. Device for production of a windscreen wiper arm (10) with a U-profile cross section, the device having bending means (22, 23) for producing a U-profile from a flat arm mounting plate (14) provided with two passage holes (12), a positioning means for displacing an undriven rivet (15) into the passage holes (12), which are aligned with each other after the U-profile is produced, and deformation means (18) for production of at least one rivet head (17) on the undriven rivet (15), **characterized in that** the bending means (22, 23), the positioning means (16) and the deformation means (18) are arranged in a single machining station.

9. Device according to Claim 8, **characterized in that** the bending means (22, 23) are designed as punches (22, 23) which can be moved linearly towards one another and away from one another.

10. Device according to Claim 8 or 9, **characterized in that** the positioning means (16) is designed as a run-on slope (16) on one of the punches (22, 23).

11. Device according to one of the preceding claims, **characterized in that** the deformation means (18) are designed as moveable deformation elements (18).

12. Device according to one of the preceding claims, **characterized in that** the run-on slope (16) is designed as a linear, straight guide edge (16).

13. Device according to one of the preceding claims, **characterized in that** the deformation elements (18) are designed as shells (18) executing a wobbling movement.

14. Device according to one of the preceding claims, **characterized in that** the device (19) has a stabilizing means (20) for the rivet part, which is situated between the limbs (11) of the U-profile, during production of the rivet head (17).

15. Device according to one of the preceding claims, **characterized in that** the punches (22, 23) are provided with a recess (27) in the pivoting region of the undriven rivet (15).

16. Device according to one of the preceding claims, **characterized in that** the device (19) is operatively connected to a vibrator for supplying the undriven rivet.

17. Device according to one of the preceding claims, **characterized in that** the device (19) has a reference element (33) for the exact positioning of the flat arm mounting plate (14) between the punches (22, 23).

## Revendications

1. Procédé de fabrication d'un étrier (10) de section transversale en U pour essuie-glace, comprenant deux trous débouchants (12) disposés dans les branches de l'étrier (10) et traversés par un rivet (15),
**caractérisé par**
les étapes suivantes consistant à :
- réaliser les trous débouchants (12) dans une platine d'étrier plane (14) ;
- insérer un rivet brut (15) dans l'un des trous débouchants (12) ;
- plier les branches (11) pour réaliser le profil en U et positionner ainsi le rivet brut (15) dans une position en alignement par rapport à l'autre trou débouchant (12) ;
- déplacer le rivet brut (15) dans la position traversant les deux trous débouchants (12) et
- riveter le rivet brut (15).

2. Procédé selon la revendication 1,
**caractérisé en ce que**
le rivet brut (15) est fixé en position dans la platine d'étrier (14).

3. Procédé selon la revendication 2
**caractérisé en ce que**
pour fixer en position le rivet brut (15), celui-ci est comprimé dans le trou débouchant (12) de la platine d'étrier plane (14) au moyen d'un ajustage serré.

4. Procédé selon l'une des revendications précédentes,
**caractérisé en ce que**
le rivet brut (15) est poussé dans l'autre trou débouchant (12) de l'étrier (10) en forme de U au moyen d'une pente d'amorce (16) qui se trouve en contact fonctionnel avec un bord de rivet (32) jusqu'à ce que le rivet brut (15) dépasse vers l'extérieur des trous débouchants (12) par ses extrémités.

5. Procédé selon l'une des revendications précédentes,
**caractérisé en ce que**
les extrémités du rivet brut (15) dépassant de l'étrier (10) en forme de U vers l'extérieur subissent une déformation plastique au moyen d'un procédé de basculement pour former à chaque fois une tête de rivet (17).

6. Procédé selon l'une des revendications précédentes,
**caractérisé en ce que**
les deux extrémités du rivet brut (15) subissent simultanément une déformation plastique.

7. Procédé selon l'une des revendications précédentes,
**caractérisé en ce que**
pendant la déformation plastique des deux extrémités, le rivet brut (15) est stabilisé entre les branches (11) au niveau de la partie de sa tige.

8. Dispositif de fabrication d'un étrier (10) de section transversale en U pour essuie-glace, le dispositif présentant des moyens de pliage (22, 23) pour réaliser un profil en U à partir d'une platine d'étrier plane (14) munie de deux trous débouchants (12), un moyen de positionnement pour déplacer un rivet brut (15) dans les trous débouchants (12) alignés l'un par rapport à l'autre après la réalisation du profil en U, et des moyens de déformation (18) pour fabriquer au moins une tête de rivet (17) sur le rivet brut (15),
**caractérisé en ce que**
les moyens de pliage (22, 23), les moyens de positionnement (16) et les moyens de déformation (18) sont disposés dans un seul poste de façonnage.

9. Dispositif selon la revendication 8,
**caractérisé en ce que**
les moyens de pliage (22, 23) ont la forme de poinçons (22, 23) linéaires pouvant se déplacer l'un vers l'autre, et à distance l'un de l'autre.

10. Dispositif selon la revendication 8 ou 9,
**caractérisé en ce que**
le moyen de positionnement (16) a la forme d'une pente d'amorce (16) sur l'un des poinçons (22, 23).

11. Dispositif selon l'une des revendications précédentes,
**caractérisé en ce que**
les moyens de déformation (18) ont la forme d'éléments de déformation mobiles (18).

12. Dispositif selon l'une des revendications précédentes,
**caractérisé en ce que**
la pente d'amorce (16) a la forme d'un bord de guidage linéaire et rectiligne (16).

13. Dispositif selon l'une des revendications précédentes,
**caractérisé en ce que**
les éléments de déformation (18) ont la forme de coquilles (18) effectuant un mouvement basculant.

14. Dispositif selon l'une des revendications précédentes,
**caractérisé en ce que**
le dispositif (19) présente un moyen de stabilisation (20) pour la partie de rivet située entre les branches (11) du profil en U pendant la fabrication de la tête de rivet (17).

15. Dispositif selon l'une des revendications précédentes,
**caractérisé en ce que**
les poinçons (22, 23) sont munis d'un évidement (27) dans la région pivotante du rivet brut (15).

16. Dispositif selon l'une des revendications précédentes,
**caractérisé en ce que**
le dispositif (19) est relié en fonctionnement à un vibrateur pour diriger le rivet brut.

17. Dispositif selon l'une des revendications précédentes,
**caractérisé en ce que**
le dispositif (19) présente un élément de référence (33) pour positionner exactement la platine d'étrier plane (14) entre les poinçons (22, 23).
